(19) 

Europäisches
Patentamt
European
Patent Office
Office européen
des brevets

(11) **EP 4 642 119 A1**

(12) **EUROPEAN PATENT APPLICATION**
published in accordance with Art. 153(4) EPC

(43) Date of publication:
**29.10.2025 Bulletin 2025/44**

(21) Application number: **22969031.8**

(22) Date of filing: **23.12.2022**

(51) International Patent Classification (IPC):
*H04W 68/02* (2009.01)

(52) Cooperative Patent Classification (CPC):
**H04W 52/02; H04W 68/00; H04W 68/02;
H04W 72/0446; H04W 76/28**

(86) International application number:
**PCT/CN2022/141635**

(87) International publication number:
**WO 2024/130744 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **LI, Yanhua
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **INFORMATION PROCESSING METHOD AND APPARATUS, AND COMMUNICATION DEVICE
AND STORAGE MEDIUM**

(57)    Provided in the embodiments of the present disclosure are an information processing method and apparatus, and a communication device and a storage medium. The information processing method executed by a user equipment (UE) or a network device may comprise: according to a time-domain overlapping condition between a candidate time-domain location of a first PTW of a UE and a time-domain location of a second PTW of the UE, determining a target time-domain start point location of the first PTW, wherein the first PTW is a PTW allocated by a random access network (RAN) for the UE, and the second PTW is a PTW allocated by a core network (CN) for the UE.

S1110: determining a target time domain starting location of a first paging time window (PTW) according to a time domain overlapping condition between a candidate time domain location of the first PTW and a time domain location of a second PTW of the UE

FIG. 2

## Description

### FIELD

The present disclosure relates to the field of wireless communication technologies, and in particular relates to a method and an apparatus for processing information, a communication device and a storage medium.

### BACKGROUND

A user equipment (UE) may also be a terminal device or a terminal. In order to prolong a standby duration, it is needed to take into account both low power consumption and low service latency. An extended discontinuous reception (eDRX) mechanism is proposed. The UE will wake up or sleep according to an eDRX cycle of the eDRX mechanism.
In some cases, in a case where the eDRX cycle is long enough, a paging time window (PTW) is configured within an on duration of the eDRX cycle. The UE monitors a paging channel within the PTW in order to receive downlink data monitored, and may be in a sleep state in the rest time, thereby further saving the power consumption of the UE.

### SUMMARY

Embodiments of the present disclosure provide a method and an apparatus for processing information, a communication device and a storage medium.
According to a first aspect of embodiments of the present disclosure, there is provided a method for processing information, performed by a user equipment (UE) or a network device, including: determining a target time domain starting location of a first paging time window (PTW) according to a time domain overlapping condition between a candidate time domain location of the first PTW and a time domain location of a second PTW of the UE, in which the first PTW is a PTW allocated by a radio access network (RAN) to the UE, and the second PTW is a PTW allocated by a core network (CN) to the UE.
According to a second aspect of embodiments of the present disclosure, there is provided a first determining module configured to determine a target time domain starting location of a first paging time window (PTW) according to a time domain overlapping condition between a candidate time domain location of the first PTW and a time domain location of a second PTW of a user equipment (UE), in which the first PTW is a PTW allocated by a radio access network (RAN) to the UE, and the second PTW is a PTW allocated by a core network (CN) to the UE.
According to a third aspect of embodiments of the present disclosure, there is provided a communication device, including a processor, a transceiver, a memory, and executable programs stored in the memory and capable of being run by the processor, in which the processor executes the method for processing information provided in any technical solution of the first aspect when running the executable programs.
According to a fourth aspect of embodiments of the present disclosure, there is provided a computer storage medium having stored therein executable programs that, when executed by a processor, cause the method for processing information provided in any technical solution of the first aspect to be implemented.
With the technical solution provided in the embodiments of the present disclosure, the target time domain starting location of the first PTW will be determined according to the time domain overlapping condition between the candidate time domain location of the first PTW and the time domain location of the second PTW, instead of directly determining the candidate time domain location of the first PTW as a final time domain starting location of the first PTW (i.e. the target time domain starting location). Therefore, the candidate time domain location of the first PTW and the time domain location of the second PTW may be referred to at the same time, and the correlation between the first PTW and the second PTW is fully considered, such that the time domain location of the first PTW is determined more reasonably, and the power consumption of the UE is further reduced.
It is to be understood that both the foregoing general description and the following detailed description are illustrative and explanatory only and are not restrictive of the disclosure, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.

FIG. 1 is a schematic diagram illustrating a wireless communication system according to an illustrative embodiment.
FIG. 2 is a flow chart illustrating a method for processing information according to an illustrative embodiment.
FIG. 3 is a flow chart illustrating a method for processing information according to an illustrative embodiment.

FIG. 4 is a flow chart illustrating a method for processing information according to an illustrative embodiment.

FIG. 5 is a flow chart illustrating a method for processing information according to an illustrative embodiment.

FIG. 6 is a flow chart illustrating a method for processing information according to an illustrative embodiment.

FIG. 7 is a schematic diagram illustrating distribution of a PTW in a time domain according to an illustrative embodiment.

FIG. 8 is a block diagram illustrating an apparatus for processing information according to an illustrative embodiment.

FIG. 9 is a block diagram illustrating a UE according to an illustrative embodiment.

FIG. 10 is a block diagram illustrating a communication device according to an illustrative embodiment.

## DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to embodiments of the present disclosure.

Terms used herein in the embodiments of the present disclosure are only for the purpose of describing specific embodiments, but should not be construed to limit embodiments of the present disclosure. As used in the embodiments of the present disclosure, "a/an", "said" and "the" in singular forms are intended to include plural forms, unless clearly indicated in the context otherwise. It should also be understood that the term "and/or" used herein represents and contains any or all possible combinations of one or more associated listed items.

It should be understood that, although terms such as "first," "second" and "third" may be used in the embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" may be construed to mean "when" or "upon" or "in response to determining" depending on the context.

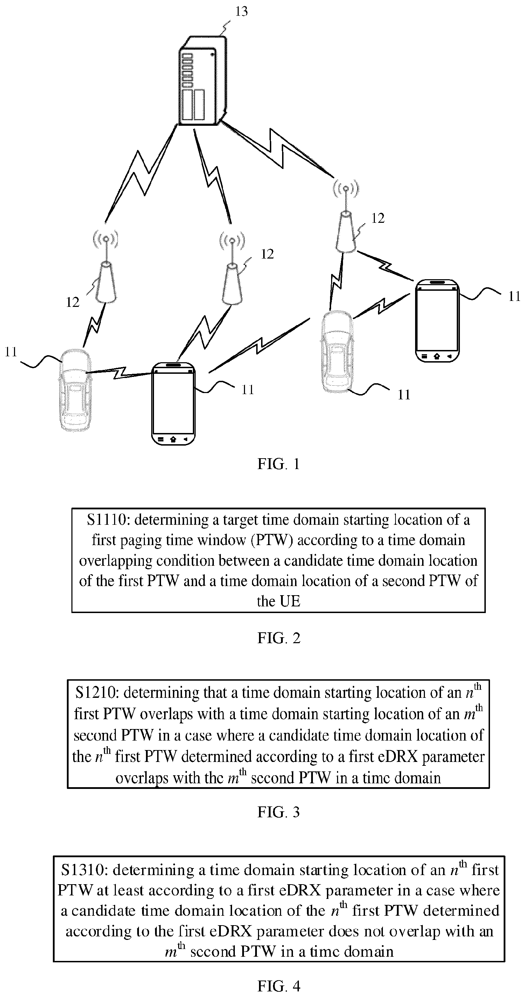

Reference is made to FIG. 1, which is a schematic diagram showing a wireless communication system provided in an embodiment of the present disclosure. As shown in FIG. 1, the wireless communication system is a communication system based on a cellular mobile communication technology, and may include several UEs 11 and several network devices 12.

The UE 11 may be a device that provides voice and/or data connectivity to a user. The UE 11 can communicate with one or more core networks via a radio access network (RAN). The UE 11 can be an Internet of Things terminal, such as a sensor device, a mobile phone (or referred to as a "cellular" phone) and a computer with an Internet of Things terminal. For example, the UE 11 can be a fixed, portable, pocket-sized, handheld, computer built-in or vehicle-mounted apparatus. For example, the UE 11 may be a station (STA), a subscriber unit, a subscriber station, a mobile station, a mobile, a remote station, an access point, a remote terminal, an access terminal, a user terminal, a user agent, a user device, or a user equipment (UE). Alternatively, the UE 11 may also be a device of an unmanned aerial vehicle. Alternatively, the UE 11 may also be a vehicle-mounted device, for example, a driving computer with a wireless communication function, or a wireless communication device externally connected with a driving computer. Alternatively, the UE 11 may be a roadside device, such as a street lamp, a signal lamp or other roadside devices with a wireless communication function.

The network device 12 may be a network side device in the wireless communication system. The wireless communication system can be a 4th generation mobile communication (4G) system, also referred to as a long term evolution (LTE) system. Alternatively, the wireless communication system may also be a 5G system, also referred to as a new radio (NR) system or a 5G NR system. Alternatively, the wireless communication system may also be a next generation system of the 5G system. The access network in the 5G system can be referred to as a new generation-radio access network (NG-RAN), or a machine-type communication (MTC) system.

The network device 12 may include an access device and/or a core network device. The access device may be an evolved access device (eNB) used in the 4G system. Alternatively, the access device may also be an access device (gNB) of a centralized distributed architecture in the 5G system. When the access device adopts the centralized distributed architecture, it usually includes a central unit (CU) and at least two distributed units (DUs). A protocol stack of a packet data convergence protocol (PDCP) layer, a radio link control (RLC) layer and a media access control (MAC) layer is provided in the central unit. A protocol stack of a physical (PHY) layer is provided in the distributed unit. The specific implementation of the access device is not limited in the embodiments of the present disclosure.

A wireless connection can be established between the network device 12 and the UE 11 via a wireless radio. In different embodiments, the wireless radio is a wireless radio based on the 4th generation mobile communication network technology (4G) standard. Alternatively, the wireless radio is a wireless radio based on the 5th generation mobile communication network technology (5G) standard. For example, the wireless radio is a new radio. Alternatively, the wireless radio can also be a wireless radio based on the next generation mobile communication network technology standard of the 5G.

As shown in FIG. 2, embodiments of the present disclosure provide a method for processing information, performed by a UE or a network device, including the following step.

In step S1110, a target time domain starting location of a first paging time window (PTW) is determined according to a time domain overlapping condition between a candidate time domain location of the first PTW and a time domain location of a second PTW of the UE, in which the first PTW is a PTW allocated by a radio access network (RAN) to the UE, and the second PTW is a PTW allocated by a core network (CN) to the UE.

The UE may be the UE 11 shown in FIG. 1. The network device may also be the network device 12 shown in FIG. 1. For example, the network device may be the access device mentioned in the aforementioned embodiment.

The method for processing the information may be performed by the UE or the network device. For example, in a case where the UE determines the target time domain starting location of the first PTW, the UE needs to determine which location in a time domain is used to start monitoring a paging message; and in a case where an execution device is the network device, the network device may determine when to send the paging message to the UE, such that the UE may monitor the paging message, after determining the target time domain starting location of the first PTW.

For example, the RAN may further configure a first extended discontinuous reception (eDRX) parameter for the UE. Similarly, the CN will configure a second eDRX parameter for the UE.

The first eDRX parameter configured by the RAN for the UE is an eDRX parameter of an inactive mode eDRX, or an eDRX parameter for RAN paging, or referred to as an eDRX parameter configured by the RAN. The eDRX parameter may be configured by the RAN.

The second eDRX parameter configured by the CN for the UE is an eDRX parameter of an idle mode eDRX, or an eDRX parameter for CN paging, or referred to as an eDRX parameter allocated by a higher layer. The eDRX parameter may be configured by the higher layer. For example, the first eDRX parameter may include at least one of: a first eDRX cycle, or a duration of the first PTW.

For example, the duration of the first PTW is much shorter than the first eDRX cycle.

It is worth noting that the duration of the first PTW is an optional parameter. In a case where the first eDRX parameter does not include the duration of the first PTW, it may be determined by default that there is no need to provide a PTW in the first eDRX cycle. Alternatively, in a case where the duration of the first eDRX cycle is shorter than a preset duration, it is determined by default that the first PTW may not be provided in the first eDRX cycle.

In a case where the first PTW is configured in the first eDRX cycle, a candidate time domain starting location of the first PTW in each first eDRX cycle may be determined according to a protocol agreement or pre-agreement between the network device and the UE.

The first eDRX parameter may be configured for the UE by an access network device such as a base station.

For example, a candidate time domain location of the first PTW may be determined according to the first eDRX parameter as follows: determining a hyperframe number of the first PTW according to the first eDRX cycle, in which the hyperframe number indicates a hyperframe (PH) where the candidate time domain starting location of the first PTW is located; and determining a radio frame number according to the first eDRX cycle, in which the radio frame number indicates a radio frame (PTW_start) where the candidate time domain starting location of the first PTW is located.

Specifically, H-SFN mod $T_{eDRX\_RAN}$ = (UE_ID_H mod $T_{eDRX\_RAN}$), where H-SFN represents the hyperframe number, $T_{eDRX\_RAN}$ may be the first eDRX cycle, and UE_ID_H may be 13 most critical (i.e. most significant) bits in a hashed identifier (ID) of the UE. For example, UE_ID_H may be the 13 most significant bits of the hashed ID of the UE.

$$SFN = 128 * i_{eDRX\_RAN}; \text{ and } i_{eDRX\_RAN} = floor(UE\_ID\_H / T_{eDRX\_RAN}) \text{ mod } 8.$$

SFN represents the radio frame number, and $i_{eDRX\_RAN}$ represents a sequence number of the first eDRX cycle.

In this way, H-SFN and SFN may be used to calculate the aforementioned candidate time domain starting location of the first PTW. Then, a time domain ending location of the first PTW is calculated in combination with the $L_{eDRX\_RAN}$. The $L_{eDRX\_RAN}$ may be a length of the first PTW.

It is worth noting that the duration of the first PTW is an optional parameter. In a case where the first eDRX parameter does not include the duration of the first PTW, it may be determined by default that there is no need to provide the PTW in the first eDRX cycle. Alternatively, in a case where the duration of the first eDRX cycle is shorter than the preset duration, it is determined by default that the first PTW may not be provided in the first eDRX cycle.

In a case where the first PTW is configured in the first eDRX cycle, the candidate time domain starting location of the first PTW in each first eDRX cycle may be determined according to the protocol agreement or the pre-agreement between the network device and the UE.

For example, the second eDRX parameter may include at least one of: a second eDRX cycle, or a duration of the second PTW.

The second eDRX parameter may be configured for the UE by a mobility management entity or a core network device with an access management function.

For example, a time domain location of the second PTW may be determined according to the second eDRX parameter as follows: determining a hyperframe number of the second PTW according to the second eDRX cycle, in which the hyperframe number indicates a hyperframe where the time domain starting location of the second PTW is located; and determining a radio frame number according to the second eDRX cycle, in which the radio frame number indicates a radio frame where the time domain starting location of the second PTW is located. Specifically, H-SFN mod $T_{eDRX\_CN}$ = (UE_ID_H mod $T_{eDRX\_CN}$), where H-SFN represents the hyperframe number, $T_{eDRX\_CN}$ may be the second eDRX cycle, and UE_ID_H may be a high-order bit or a most significant bit in the hashed ID of the UE. For example, UE_ID_H may be 13 most significant bits of the hashed ID of the UE.

$$SFN = 128 * i_{eDRX\_CN}, \text{ and } i_{eDRX\_CN} = floor(UE\_ID\_H / T_{eDRX\_CN}) \bmod 8.$$

SFN represents the radio frame number, and $i_{eDRX\_CN}$ represents a sequence number of the second eDRX cycle.

In this way, H-SFN and SFN may be used to calculate the aforementioned time domain starting location of the second PTW. Then, a time domain ending location of the second PTW is calculated in combination with the $L_{eDRX\_CN}$. The $L_{eDRX\_CN}$ may be a length of the second PTW.

For example, the first eDRX cycle is much shorter than the second eDRX cycle; and/or for another example, the duration of the second PTW is longer than or equal to the duration of the first PTW.

In this way, after the UE receives the first eDRX parameter and the second eDRX parameter, the UE may determine, according to the first eDRX parameter and the second eDRX parameter, an eDRX cycle and/or a PTW that need to be executed in a case where the UE starts an eDRX mechanism. Moreover, since both the first eDRX parameter and the second eDRX parameter come from the network device, the network device may determine the eDRX cycle and/or the PTW according to the first eDRX parameter and the second eDRX parameter.

In embodiments of the present disclosure, in a case where the CN and the RAN respectively configure the first PTW and the second PTW for the UE, for the same UE, in order to further reduce the power consumption of the UE, a time domain overlapping state of the first PTW and the second PTW will be considered in a case where the target time domain starting location of the first PTW is determined.

For example, step S1110 may include: determining the candidate time domain location of the first PTW; and determining the time domain location of the second PTW.

Since both the first PTW and the second PTW are periodically distributed in the time domain according to the corresponding eDRX cycle, after determining the candidate time domain starting location of the first PTW, it is determined whether a candidate time domain location of an $m^{th}$ first PTW has an overlapping relationship with a time domain location of any second PTW, where $m$ is an arbitrary natural number.

In a case where the candidate time domain location of the $m^{th}$ first PTW has an overlapping range with the time domain location of the second PTW, it is determined that the candidate time domain location of the $m^{th}$ first PTW overlaps with the second PTW in the time domain.

In a case where the candidate time domain location of the $m^{th}$ first PTW does not have the overlapping range with the time domain location of the second PTW, it is determined that the candidate time domain location of the $m^{th}$ first PTW does not overlap with the second PTW in the time domain. The candidate time domain location of the $m^{th}$ first PTW may be a candidate time domain starting location of the $m^{th}$ first PTW and a candidate time domain ending location of the $m^{th}$ first PTW. For example, in a case where the candidate time domain starting location and/or the candidate time domain ending location of the $m^{th}$ first PTW is located within one second PTW, it is determined that the candidate time domain location of the $m^{th}$ first PTW overlaps with the second PTW in the time domain; otherwise, it is determined that the candidate time domain location of the $m^{th}$ first PTW does not overlap with the second PTW in the time domain.

In a case where a PH calculated of the $m^{th}$ first PTW is the same as a PH of one second PTW, it is considered that the candidate time domain location of the $m^{th}$ first PTW overlaps with the second PTW in the time domain.

After a time domain overlapping condition between the candidate time domain location of the first PTW and the time domain location of the second PTW is determined, the target time domain starting location of the first PTW is finally determined.

Here, step S1110 may include: re-determining a reference parameter of the target time domain starting location of the first PTW according to the time domain overlapping condition between the candidate time domain location of the first PTW and the time domain location of the second PTW of the UE; and determining the target time domain starting location of the first PTW according to the reference parameter re-determined.

After the target time domain starting location of the first PTW is determined, a target ending location of the first PTW will be determined according to the duration of the first PTW defined by the first eDRX parameter.

In this way, in the embodiments of the present disclosure, in a process of considering the association of the eDRX mechanism for the same UE, specifically, the time domain starting location of the first PTW is re-determined according to the overlapping condition between the candidate time domain location of the first PTW and the time domain location of the second PTW, that is, the target time domain starting location of the first PTW is obtained, thereby increasing a time domain overlapping range of the first PTW and the second PTW in a case where the eDRX mechanism is executed according to the first eDRX as much as possible, thereby saving the power consumption of the UE as much as possible.

In a case where the first eDRX cycle is shorter than the second eDRX cycle, a frequency of the first eDRX cycle occurring in the time domain is higher than a frequency of the second eDRX cycle. For example, in a case where the first eDRX cycle is equal to 1/3 of the second eDRX cycle, three first eDRX cycles will occur in one second eDRX cycle in the time domain. Moreover, it is considered that, in a normal case, an awake period and a sleep period in the eDRX cycle are equal and the PTW is provided in the awake period, and thus at least one first PTW in the first eDRX cycle will not overlap with the second PTW in the second eDRX cycle.

In this way, candidate first PTWs may be divided into two types according to the candidate time domain location of the first PTW and the time domain location of the second PTW, one type is a first type of first PTW in which the candidate time domain location of the first PTW and the time domain location of the second PTW are at least partially overlapped, and the other type is a second type of first PTW in which the candidate time domain location of the first PTW and the time domain location of the second PTW are not overlapped. Final time domain locations of these two types of first PTWs may be determined by different reference parameters.

In some embodiments, step S1110 may include: dividing the first PTW into the first type of the first PTW and the second type of the first PTW according to the time domain overlapping condition between the candidate time domain location of the first PTW and the time domain location of the second PTW of the UE; and re-determining the reference parameter, in which the reference parameter re-determined is at least used for determining a target time domain starting location of the second type of the first PTW, and for determining that a time domain starting location of the first type of the first PTW overlaps with a time domain starting location of a corresponding second PTW.

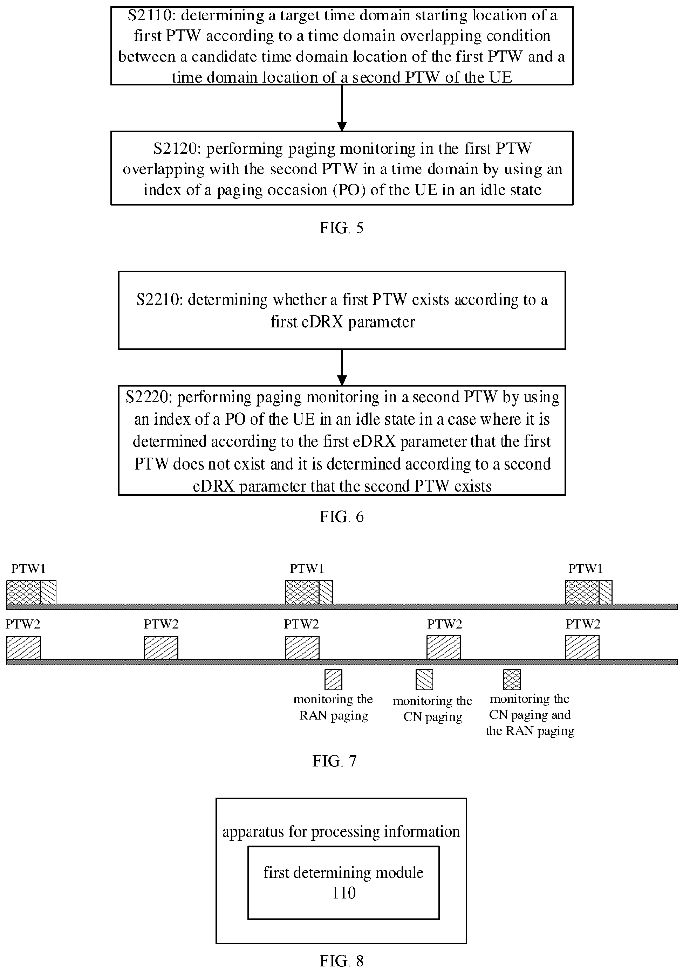

For example, as shown in FIG. 7, PTW1 is the second PTW, and PTW2 is the first PTW. The location of PTW2 in FIG. 7 is the candidate time domain location of the first PTW. It may be seen that the second PTWs are periodically distributed in the time domain. According to the candidate time domain location, the first PTWs are also periodically distributed in the time domain. Moreover, the second PTW2 and the fourth PTW2 in FIG. 7 do not overlap with any PTW1 in the time domain, while the first PTW2, the third PTW2 and the fifth PTW2 in FIG. 7 overlap with the respective PTW1 in the time domain. As shown in FIG. 7, the first PTW2, the third PTW2 and the fifth PTW2 are the aforementioned first type of the first PTW, and the remaining PTW2s are the second type of the first PTW. Certainly, this is merely an example, and the specific implementation is not limited to this example.

As shown in FIG. 3, embodiments of the present disclosure provide a method for processing information, performed by a UE or a network device, including the following step.

In step S 1210, it is determined that a time domain starting location of an $n^{th}$ first PTW overlaps with a time domain starting location of an $m^{th}$ second PTW in a case where a candidate time domain location of the $n^{th}$ first PTW determined according to a first eDRX parameter overlaps with the $m^{th}$ second PTW in a time domain.

In some embodiments, each of the $n$ and the $m$ may be an arbitrary natural number, which is 0 or a positive integer.

In a case where the candidate time domain location of the $n^{th}$ first PTW overlaps with and the $m^{th}$ second PTW in the time domain, the time domain starting location of the $n^{th}$ first PTW is aligned with the time domain starting location of the $m^{th}$ second PTW. In this way, the time domain location of the $n^{th}$ first PTW overlaps with the time domain location of the $m^{th}$ second PTW in a maximum range.

In this embodiment, equivalent to determining the time domain location of the first PTW according to the time domain location of the second PTW, the reference parameter for determining the time domain location of the $n^{th}$ first PTW is the time domain location of the $m^{th}$ second PTW.

As shown in FIG. 4, embodiments of the present disclosure provide a method for processing information, performed by a UE or a network device, including the following step.

In step S1310, a time domain starting location of an $n^{th}$ first PTW is determined at least according to a first eDRX parameter in a case where a candidate time domain location of the $n^{th}$ first PTW determined according to the first eDRX parameter does not overlap with an $m^{th}$ second PTW in a time domain.

In some embodiments, each of the $n$ and the $m$ may be an arbitrary natural number, which is 0 or a positive integer.

In a case where the candidate time domain location of the $n^{th}$ first PTW does not overlap with the $m^{th}$ second PTW in the time domain, it is determined that a reference parameter of the time domain starting location of the $n^{th}$ first PTW at least includes the first eDRX parameter.

It is worth noting that, in embodiments of the present disclosure, in addition to using the first eDRX parameter, other parameters may also be referred to so as to determine the time domain starting location of the first PTW.

For example, the first eDRX parameter at least includes a first eDRX cycle, and a second eDRX parameter at least includes a second eDRX cycle.

Determining the time domain starting location of the $n^{th}$ first PTW at least according to the first eDRX parameter includes: determining a hyperframe number according to the first eDRX cycle, in which the hyperframe number indicates a hyperframe where a time domain starting location of an $n^{th}$ PTW is located; and determining a radio frame number according to the first eDRX cycle or the second eDRX cycle, in which the radio frame number indicates a radio frame where the time domain starting location of the $n^{th}$ PTW is located.

For example, H-SFN mod $T_{eDRX\_RAN}$= (UE_ID_H mod $T_{eDRX\_RAN}$), where H-SFN represents the hyperframe number, $T_{eDRX\_RAN}$ may be the first eDRX cycle, and UE_ID_H may be a high-order bit in a hashed ID of the UE. For example, UE_ID_H may be 13 most significant bits of the hashed ID of the UE.

$$SFN = 128 * i_{eDRX\_RAN}, \text{ and } i_{eDRX\_RAN} = floor(UE\_ID\_H / T_{eDRX\_RAN}) \bmod 8;$$

or

$$SFN = 128 * i_{eDRX\_CN}, \text{ and } i_{eDRX\_CN} = floor(UE\_ID\_H / T_{eDRX\_CN}) \bmod 8.$$

SFN represents the radio frame number, $i_{eDRX\_RAN}$ represents a sequence number of the first eDRX cycle, and $i_{eDRX\_CN}$ represents a sequence number of the second eDRX cycle.

In this way, H-SFN and SFN may be used to calculate the aforementioned candidate time domain starting location of the first PTW. Then, a time domain ending location of the first PTW is calculated in combination with the $L_{eDRX\_RAN}$.

Certainly, the above only provides a method for separately calculating a target time domain starting location of the first PTW in a case where a candidate time domain range of the first PTW does not overlap with a time domain range of the second PTW.

As shown in FIG. 5, embodiments of the present disclosure provide a method for processing information, performed by a UE or a network device, including the following steps.

In step S2110, a target time domain starting location of a first PTW is determined according to a time domain overlapping condition between a candidate time domain location of the first PTW and a time domain location of a second PTW of the UE, in which the first PTW is a PTW allocated by an RAN to the UE, and the second PTW is a PTW allocated by a CN to the UE.

In step S2120, paging monitoring is performed in the first PTW overlapping with the second PTW in a time domain by using an index of a paging occasion (PO) of the UE in an idle state.

In some embodiments, an index of a PO for an inactive state or an index of a PO for RAN paging may be a first index of a PO. An index of a PO for CN paging or an index of a PO for the idle state may be a second index of a PO.

The first index of the PO and the second index of the PO both point to a PO. The base station will send a paging message at the PO to page the UE.

In these embodiments of the present disclosure, in a case where the paging message is monitored according to the second index of the PO in the first PTW overlapping with the second PTW in the time domain, the UE respectively monitors a CN paging message and an RAN paging message at the same or multiple POs in the time domain where the first PTW overlaps with the second PTW. In this way, the power consumption caused by the monitoring of the CN paging message and the RAN paging message at different POs by the UE according to the first index of the PO and the second index of the PO may be decreased, thereby reducing the power consumption of the UE.

As shown in FIG. 6, embodiments of the present disclosure provide a method for processing information, performed by a UE or a network device, including the following steps.

In step S2210, it is determined whether a first PTW exists according to a first eDRX parameter.

In step S2220, paging monitoring is performed in a second PTW by using an index of a PO of the UE in an idle state in a case where it is determined according to the first eDRX parameter that the first PTW does not exist and it is determined according to a second eDRX parameter that the second PTW exists.

For example, in a case where a duration of the first PTW is not configured in the first eDRX parameter and/or a first eDRX cycle configured in the first eDRX parameter is less than or equal to a preset value, it is determined that the first PTW is not configured in the first eDRX parameter, that is, the first PTW does not exist. The preset value may be 10.24s.

In a case where the first PTW does not exist, in order to reduce simultaneous monitoring of an RAN paging message and a CN paging message at different POs by the UE in the second PTW, a paging occasion for monitoring will further be determined according to an index of a PO of the second eDRX parameter in the second PTW, thereby further reducing the power consumption generated by the monitoring of the RAN paging message and/or the CN paging message by the UE.

However, in a case where the second PTW is configured in the second eDRX parameter, a time period when the UE monitors the RAN paging message is partly located in the second PTW and partly located outside the second PTW. In a case where the time period is located in the second PTW, the UE uniformly monitors the CN paging message and the RAN paging message according to a PO indicated by a second index of a PO, instead of using a PO indicated by the first index of the PO to monitor the RAN paging message. In a case where the time period is located outside the second PTW, the RAN paging message may still be monitored according to the PO indicated by the second index of the PO. That is, the method further includes: determining a paging time for monitoring the RAN paging message according to the index of the PO of the first eDRX parameter at a time domain location outside the second PTW and to be used to monitor the RAN paging message.

Embodiments of the present disclosure provide a method for processing the information, including: protecting a working mode of the terminal to use the eDRX in a radio resource control (RRC) inactive state, that is, the terminal determines a paging parameter used by the terminal in the RRC inactive state according to an eDRX parameter determined by a core network (that is, the aforementioned second eDRX parameter) and/or an eDRX parameter determined by a base station (that is, the aforementioned first eDRX parameter).

The paging parameter includes an eDRX cycle.

The paging parameter includes a PTW, which is determined by:

a hyperframe where paging is located: a paging hyperframe (PH);
PTW_start: defining a first radio frame in the PH as part of the PTW; that is, PTW_start being the aforementioned time domain starting location of the PTW;
PTW_end: defining a last radio frame as the PTW; that is, PTW_end being the aforementioned time domain ending location of the PTW;
a cycle T for the UE to monitor paging messages within the PTW or outside the PTW, in which the cycle T may be a discontinuous reception (DRX) cycle.

It may be considered that the core network allocates the second eDRX parameter to the terminal, in which the second eDRX parameter is an idle mode eDRX parameter or an extended DRX for CN paging or an eDRX parameter configured by an upper layer.

The base station allocates an eDRX parameter to the terminal, that is, the aforementioned second eDRX parameter, that is, an inactive mode eDRX parameter, or an extended DRX for RAN paging, or an eDRX configured by an RAN.

Since the first eDRX parameter and the second eDRX parameter exist, the first PTW and the second PTW may exist. For example, in a case where the first eDRX cycle and the second eDRX cycle indicated by the first eDRX parameter and the second eDRX parameter are both greater than 10.24s, the first PTW exists in the first eDRX cycle indicated by the first eDRX parameter, and the second PTW exists in the second eDRX cycle indicated by the second eDRX parameter.

Moreover, the first PTWs may be further divided into a first type of first PTW and a second type of first PTW by determining whether the first PTW and the second PTW have an overlapping relationship in the time domain. The first PTW may be referred to as a PTW for the RAN paging or a PTW in an inactive state or a PTW in an inactive mode. The second PTW may be referred to as a PTW for the CN paging or a PTW in the idle state or a PTW in an idle mode.

For determining a time domain starting location of the PTW, regardless of whether the PTW is the first PTW or the second PTW, it is needed to first determine an existing H-SFN in the time domain, that is, the PH, and then determine eight candidate starting locations (PTW_start) in the H-SFN. For the first PTW and the second PTW, in a case where it is determined that there is an overlap in the time domain by a time domain starting location and a window length, it is considered that the first PTW overlaps with the second PTW in the time domain.

As an embodiment, in a case where a PH of the first PTW is equal to a PH of the second PTW in the time domain, it is considered that the two types of the PTWs overlap in the time domain.

That is, in a case where the H-SFN simultaneously satisfies the following equations:
H-SFN mod $T_{eDRX\_CN}$ = (UE_ID_H mod $T_{eDRX\_CN}$) and H-SFN mod $T_{eDRX\_RAN}$ = (UE_ID_H mod $T_{eDRX\_RAN}$), the two types of the PTWs overlap in the time domain.

As an embodiment, in a case where occurrence periods or occurrence frequencies of the first PTW and the second PTW in the time domain are in an integer multiple relationship, such as 2 times, the second PTW will overlap with one first PTW every other PTW in the time domain.

As an embodiment, in a case where the occurrence periods or the occurrence frequencies of the first PTW and the second PTW in the time domain are in the integer multiple relationship, for example, the $T_{eDRX\_CN}$=256 hyperframe is twice as long as the $T_{eDRX\_RAN}$=128 hyperframe, and UE_ID_H=0, the occurrence periods of the first PTW and the second PTW in the time domain are divided into 0 hyperframe, 256HSFN, 512HSFN ..., and 0 hyperframe, 128HSFN, 256 HSFN. In this case, the second PTW will overlap with one first PTW every other PTW in the time domain. That is, 0, 256HSFN, 512HSFN ... overlap with the first PTW, and other PHs do not overlap with the first PTW.

As an embodiment, in a case where the occurrence periods or the occurrence frequencies of the first PTW and the second PTW in the time domain are in a non-integer multiple relationship, for example, the occurrence period of the first PTW is *M*, and the occurrence period of the second PTW is *N,* it may take *M\*N* times for PTW overlap to occur once in the time domain.

Working mode 1:

The time domain starting location (PTW_start) of the first PTW, i.e., the candidate time domain starting location in the hyperframe HFN, may be determined according to the eDRX parameters determined by the core network. Moreover, other parameters are determined as follows: a cycle (PH) at which the first PTW appears is configured by the base station, and the window length of the first PTW may be configured by the base station.

The time domain starting location of the PTW is the first radio frame of the PH that is part of the PTW.

As an embodiment, the time domain starting location (PTW_start) of the first PTW (i.e., a radio frame in the hyperframe where the PTW appears) may be determined by an eDRX cycle in the eDRX parameter determined by the core network.

For example, regarding a PTW2 (the first PTW) provided by the base station and a PTW1 (the second PTW) provided by the core network: regardless of whether the PTW for the CN paging overlaps with the PTW for the RAN paging in the time domain, the time domain starting location (PTW_start) of the first PTW will be determined according to the eDRX cycle in the eDRX parameter determined by the core network, that is, aligned with a starting point of the PTW for the CN paging. Moreover, other parameters are determined as follows: the cycle (PH) at which the first PTW appears is configured by the base station, and the window length of the first PTW may be configured by the base station or the core network.

As an embodiment, the time domain starting location (PTW_start) of the first PTW may be determined according to the time domain starting location (PTW_start) of the second PTW. Moreover, other parameters are determined as follows: the cycle (PH) at which the first PTW appears is configured by the base station, and the window length of the first PTW may be configured by the base station. The advantage of doing so is that the time domain starting location (PTW_start) of the first PTW may be determined by directly using the time domain starting location (PTW_start) of the second PTW without calculation.

As an example, a hyperframe for the RAN paging needs to satisfy the following equation:

$$\text{H-SFN mod } T_{eDRX\_RAN} = (\text{UE\_ID\_H mod } T_{eDRX\_RAN}).$$

For example, the H-SFN represents a hyperframe number, and $T_{eDRX\_RAN}$ may be an eDRX cycle allocated by the base station or the RRC layer for the terminal, and may be represented by a hyperframe. For example, $T_{eDRX\_RAN}$ may be equal to or greater than 2 hyperframes, and less than or equal to 1024 hyperframes.

The time domain starting location (PTW_start) of the PTW for the RAN paging needs to satisfy the following equation:

$$\text{SFN} = 128 * i_{eDRX\_CN},$$

where

$$i_{eDRX\_CN} = \text{floor}(\text{UE\_ID\_H} / T_{eDRX\_CN}) \text{ mod } 8.$$

The time domain ending location of the PTW may be calculated by the following equation:
SFN = (PTW_start + L\*100 - 1) mod 1024, where L represents the window length of the PTW for the RAN paging. The window length of the PTW may be configured by an RRC layer or the core network.

For example, illustratively, as shown in FIG. 7, the PTW1 is the second PTW, and the PTW2 is the first PTW. The location of PTW2 in FIG. 7 is a candidate time domain location of the first PTW. It may be seen that the second PTWs are periodically distributed in the time domain. According to the candidate time domain location, the first PTWs are also periodically distributed in the time domain, and the second and fourth PTW2s in FIG. 7 do not overlap with any PTW1 in the time domain, while the first, third and fifth PTW2s in FIG. 7 overlap with the respective PTW1 in the time domain. As shown in FIG. 7, the first, third and fifth PTW2s are the aforementioned first type of the first PTW, and the remaining PTW2s are the second type of the first PTW. Therefore, the time domain starting location (PTW_start) of the first type of the PTW (the first, third and fifth PTW2s in FIG. 7) may be determined according to the time domain starting location (PTW_start) of the respective second PTW, and the time domain starting location of the second type of the PTW (the second and fourth PTW2s in FIG. 7) may be determined according to the time domain starting location (PTW_start) of the respective second PTW.

Working mode 2: that is, it is determined according to the judgment result that the first PTW overlaps with the second PTW in the time domain.

For PTWs where the first PTW overlaps with the second PTW in the time domain, the time domain starting location (PTW_start) of the first PTW may be determined according to the eDRX parameter determined by the core network. The eDRX parameter determined by the core network here may be the eDRX cycle corresponding to the second eDRX parameter mentioned above. For PTWs where the first PTW does not overlap with the second PTW in the time domain, the time domain starting location (PTW_start) of the first type of the PTW is determined according to the eDRX cycle in the eDRX parameter determined by the base station. Moreover, other parameters are determined as follows: the cycle (PH) at which the first PTW appears is configured by the base station, and the window length of the first PTW may be configured by the base station or the core network.

As an example, that is, in a case where the H-SFN satisfies both the following equations (this branch describes the scenario where the PTWs overlap in the time domain):

H-SFN mod $T_{eDRX\_CN}$= (UE_ID_H mod $T_{eDRX\_CN}$) and H-SFN mod $T_{eDRX\_RAN}$= (UE_ID_H mod $T_{eDRX\_RAN}$), the time domain starting location (PTW_start) of the PTW for the RAN paging needs to satisfy the following equation:

$$SFN = 128 * i_{eDRX\_CN},$$

where

$$i_{eDRX\_CN} = floor(UE\_ID\_H / T_{eDRX\_CN}) \bmod 8.$$

The time domain ending location of the PTW may be calculated by the following equation:
SFN = (PTW_start + L*100 - 1) mod 1024, where L represents the window length of the PTW for the RAN paging. The window length of the PTW may be configured by the RRC layer or the core network.

Otherwise, in a case where the H-SFN satisfies the following equation (this branch describes the scenario where the PTWs do not overlap in the time domain):

$$H\text{-}SFN \bmod T_{eDRX\_RAN}= (UE\_ID\_H \bmod T_{eDRX\_RAN}),$$

the time domain starting location (PTW_start) of the PTW for the RAN paging needs to satisfy the following equation:

$$SFN = 128 * i_{eDRX\_RAN},$$

where

$$i_{eDRX\_RAN} = floor(UE\_ID\_H / T_{eDRX\_RAN}) \bmod 8.$$

The time domain ending location of the PTW may be calculated by the following equation:
SFN = (PTW_start + L*100 - 1) mod 1024, where L represents the window length of the PTW for the RAN paging. The window length of the PTW may be configured by the RRC layer.

For example, illustratively, as shown in FIG. 7, the PTW1 is the second PTW, and the PTW2 is the first PTW. The location of PTW2 in FIG. 7 is a candidate time domain location of the first PTW. It may be seen that the second PTWs are periodically distributed in the time domain. According to the candidate time domain location, the first PTWs are also periodically distributed in the time domain, and the second and fourth PTW2s in FIG. 7 do not overlap with any PTW1 in the time domain, while the first, third and fifth PTW2s in FIG. 7 overlap with the respective PTW1 in the time domain. As shown in FIG. 7, the first, third and fifth PTW2s are the aforementioned first type of the first PTW, and the remaining PTW2s are the second type of the first PTW. Therefore, the time domain starting location (PTW_start) of the first type of the PTW (the first, third and fifth PTW2s in FIG. 7) may be determined according to the time domain starting location (PTW_start) of the respective second PTW, and the time domain starting location of the second type of the PTW (the second and fourth PTW2s in FIG. 7) may be determined according to PTW_start'.

The time domain starting location of the second PTW (PTW_start) needs to satisfy the following equation:

$$SFN = 128 * i_{eDRX\_CN},$$

where

$$i_{eDRX\_CN} = floor(UE\_ID\_H / T_{eDRX\_CN}) \bmod 8.$$

The PTW_start' needs to satisfy the following equation:

$$SFN = 128 * i_{eDRX\_RAN},$$

where

$$i_{eDRX\_RAN} = floor(UE\_ID\_H / T_{eDRX\_RAN}) \bmod 8.$$

The above shows that there is an overlapping part of the first PTW and the second PTW of the UE in the time domain. The time domain starting location of the first PTW of the UE may be determined in any of the above ways. The time domain starting location may also be simply referred to as a starting point. In a case where the starting point of the first PTW is determined, a duration of the overlapping part also needs to be determined. The duration of the overlapping part is determined by the protocol agreement, indication of the network device or negotiation between the UE and the network device.

For example, the duration of the overlapping part may be the window length L1 of the first PTW configured in the first eDRX parameter or the window length L2 of the second PTW configured in the second eDRX parameter.

For the UE, there is an overlapping part of the first PTW and the second PTW in the time domain. As shown in the cross-hatched part in FIG. 7, the CN paging message and the RAN paging message are monitored with a minimum cycle among a specific UE DRX cycle configured by the core network, an RAN paging cycle and a default DRX cycle configured by the base station.

In addition to the PTW parts that overlap in the time domain, there is also a PTW for monitoring the CN paging, such as the right diagonal pattern part in FIG. 7; or a PTW for monitoring the RAN paging, such as the left diagonal pattern part in FIG. 7. For the PTW used to monitor the CN paging, the UE monitors the CN paging with a minimum cycle among the specific UE DRX cycle configured by the core network and the default DRX cycle configured by the base station. Moreover, for the PTW used to monitor the RAN paging, the UE monitors the RAN paging by using an RAN paging cycle configured by the base station.

In a further embodiment, for PTW parts of a terminal that overlap in the time domain, a starting point of the overlapping PTW part may be determined in any of the above methods. After the starting point of the overlapping PTW part is determined, the duration of the overlapping PTW part also needs to be determined. The duration of the overlapping PTW part is a duration predetermined by the protocol (which may be a PTW duration L1 configured in the first eDRX parameter or a PTW duration L2 configured in the second eDRX parameter).

Therefore, for the terminal, in the PTW parts that overlap in the time domain (the cross-hatched part in FIG. 7), the CN paging and the RAN paging are monitored with the minimum cycle among the specific UE DRX cycle configured by the core network, the RAN paging cycle and the default DRX cycle configured by the base station.

In addition to the PTW parts that overlap in the time domain, there is also a PTW used to monitor the CN paging (i.e. the right diagonal pattern part in FIG. 7), or a PTW used to monitor the RAN paging (i.e. the left diagonal pattern part in FIG. 7). For the PTW used to monitor the CN paging, the terminal monitors the CN paging with the minimum cycle among the specific UE DRX cycle configured by the core network and the default DRX cycle configured by the base station. Moreover, for the PTW used to monitor the RAN paging, the terminal monitors the RAN paging by using the RAN paging cycle configured by the base station.

In some embodiments, a third PTW or a common PTW is obtained by combining the first eDRX parameter and the second eDRX parameter, and is used to monitor the CN paging and the RAN paging simultaneously. This necessarily means that the PTWs overlap in the time domain.

APH of the third PTW is obtained according to a third eDRX parameter. For example, a third eDRX cycle is obtained by taking the smaller one of the first eDRX cycle and the second eDRX cycle.

As an example, that is, in a case where the H-SFN satisfies both the following equations (this branch describes the scenario where the PTWs overlap in the time domain):

$$\text{H-SFN} \mod T_{eDRX} = (\text{UE\_ID\_H} \mod T_{eDRX}),$$

where $T_{eDRX} = \min\{ T_{eDRX\_CN}, T_{eDRX\_RAN}\}$ or $T_{eDRX\_RAN}$,
the time domain starting location (PTW_start) for the third PTW needs to satisfy the following equation:

$$\text{SFN} = 128 * i_{eDRX},$$

where

$$i_{eDRX} = \text{floor}(\text{UE\_ID\_H} / T_{eDRX}) \mod 8.$$

The time domain ending location of the PTW may be calculated by the following equation:
SFN = (PTW_start + L*100 - 1) mod 1024, where L represents the window length of the PTW that may be configured by the RRC layer or the core network.

In this mode, a monitoring behavior of the UE is as follows: within the common PTW, T may be a minimum value of the UE specific DRX cycle, the RAN paging cycle, and the default DRX cycle.

In a case where the RAN paging cycle is configured by the upper layer, T needs to refer to the RAN paging cycle; otherwise, T does not need to refer to the RAN paging cycle. The default DRX cycle may be a DRX cycle broadcast via a system message. In a case where the system message has a default DRX cycle, T needs to refer to the default DRX cycle; otherwise, T does not need to refer to the default DRX cycle.

The T may be a cycle for monitoring the CN paging message and/or the RAN paging message in the PTW.

For the determination of the index of the PO, the following applies.

For a time period in which the UE needs to monitor both the CN paging message and the RAN paging message, its index of the PO (Index (i_s), indicating the index of the PO) is the same as an index of a PO in the idle state.

Specifically, in a case where the first type of the PTW (that is, RAN PTW) does not exist, in the second PTW (CN PTW), for a terminal in the RRC inactive state, an index of a PO (Index (i_s), indicating the index of the PO) of a paging message of the terminal is the same as an index of a PO of the terminal in an RRC idle state.

The purpose of doing this is that in the second PTW (CN PTW), in an overlapping time period in a case where the CN paging message and the RAN paging message need to be monitored simultaneously, the index of the PO (Index (i_s), indicating the index of the PO) of the terminal is the same as the index of the PO of the terminal in the RRC idle state. In this case, the situation where the CN paging and the RAN paging may not be monitored simultaneously will not occur.

In a case where the first type of the PTW (that is, RAN PTW) and the second PTW (CN PTW) exist, in the PTWs overlapping in the time domain, for the terminal in the RRC inactive state, its index of the PO (Index (i_s), indicating the index of the PO) is the same as the index of the PO of the terminal in the RRC idle state. That is, the index of the PO is calculated using a paging parameter of the terminal in the idle state.

The purpose of doing this is that in the PTWs (a starting point of the PTW is a starting point of the first PTW or the second PTW, and a length of the PTW is the window length of the first PTW or a window length of the second PTW) overlapping in the time domain, in the overlapping time period in a case where the CN paging message and the RAN paging message need to be monitored simultaneously, the index of the PO (Index (i_s), indicating the index of the PO) of the terminal is the same as the index of the PO of the terminal in the RRC idle state. In this case, the situation where the CN paging and the RAN paging may not be monitored simultaneously will not occur.

For the inactive state of the UE (that is, the RRC inactive state), in a case where an eDRX cycle configured by the upper layer is longer than 1024 radio frames, and an eDRX cycle configured by the RRC layer is no longer than 1024 radio frames or the RRC layer does not configure the eDRX cycle, the index of the PO in the RRC idle state is used in the PTW for the CN paging (that is, the second PTW). That is, the UE uses the idle mode index of the PO to determine to monitor the RAN paging message and the CN paging message in the PTW for the CN paging, that is, the UE does not use an inactive mode index of the PO to monitor the RAN paging message in the PTW for the CN paging.

For the inactive state of the UE (that is, the RRC inactive state), in a case where the eDRX cycle configured by the upper layer is longer than 1024 radio frames, and the eDRX cycle configured by the RRC layer is longer than 1024 radio frames, then in the PTWs overlapping in the time domain, it is determined to monitor the paging message by using the index of the PO in the RRC idle state. That is, the UE uses the index of the PO in the idle state to determine to monitor the RAN paging message and the CN paging message within the PTWs overlapping in the time domain, that is, the UE does not use the index of the PO in the inactive state to monitor the RAN paging message within the PTWs overlapping in the time domain.

In an embodiment, for a time domain overlapping part between the first PTW and the second PTW of the UE, the starting point of the first PTW of the UE will be determined according to the eDRX cycle in the first eDRX parameter or the eDRX cycle in the second eDRX parameter. After the starting point of the first PTW is determined, the duration of the overlapping part also needs to be determined. The duration of the overlapping part is predetermined by the protocol. For example, the duration of the overlapping part may be the window length L1 of the first PTW configured in the first eDRX parameter or the window length L2 of the second PTW configured in the second eDRX parameter.

For the UE, in the time domain overlapping part between the first PTW and the second PTW, as shown by the cross-hatched part in FIG. 7, the CN paging message and the RAN paging message are monitored with the minimum cycle among the specific UE DRX cycle configured by the core network, the RAN paging cycle and the default DRX cycle configured by the base station. In this case, in a case of determining the index of the PO, the index of the PO in the idle state is used to determine to monitor the RAN paging message and the CN paging message.

In an embodiment, specifically, according to the above method for determining an overlapping PTW by the terminal, for the overlapping PTW part in the time domain of the terminal, a starting point of the overlapping PTW part is determined according to the eDRX cycle in the first eDRX parameter or the eDRX cycle in the second eDRX parameter. After the starting point of the overlapping PTW part is determined, a duration of the overlapping PTW part also needs to be determined. The duration of the overlapping PTW part is then predetermined by the protocol (possibly a PTW duration L1 configured in the first eDRX parameter or a PTW duration L2 configured in the second eDRX parameter).

Therefore, for the terminal, in the overlapping PTW part in the time domain (the cross-hatched part in FIG. 7), the CN paging and the RAN paging are monitored with the minimum cycle among the specific UE DRX cycle configured by the core network, the RAN paging cycle and the default DRX cycle configured by the base station. In this case, in a case of determining the index of the PO, the index of the PO in the idle state is used to determine to monitor the RAN paging message and the CN paging message.

Referring to FIG. 7, in a case where the first PTW overlaps with the second PTW in the time domain, and the time domain starting locations are the same, the window length of the first PTW is shorter than the window length of the second PTW. In a case where the time domain starting locations of the first PTW and the second PTW are the same and the window length of the first PTW is smaller than that of the second PTW, the first PTW ends earlier than the second PTW. Therefore, the UE determines to monitor the RAN paging message and the CN paging message using the index of the PO in the idle state within the PTWs that overlap in the time domain (within the first PTW).

As an example, that is, in a case where the H-SFN satisfies both the following equations (this branch describes the scenario where the PTWs overlap in the time domain):

$$\text{H-SFN mod } T_{eDRX\_CN} = (UE\_ID\_H \text{ mod } T_{eDRX\_CN}), \text{ and } \text{H-SFN mod } T_{eDRX\_RAN} = (UE\_ID\_H \text{ mod } T_{eDRX\_RAN}),$$

the time domain starting location (PTW_start) of the first PTW needs to satisfy the following equation:

$$SFN = 128 * i_{eDRX\_CN},$$

where

$$i_{eDRX\_CN} = \text{floor}(UE\_ID\_H / T_{eDRX\_CN}) \text{ mod } 8.$$

The time domain ending location of the PTW may be calculated by the following equation:
SFN = (PTW_start + L*100 - 1) mod 1024, where L represents the window length of the PTW for the RAN paging. The window length of the PTW may be configured by the RRC layer or the core network.

In this way, since the window length of the first PTW needs to be shorter than or equal to the window length of the second PTW, within the first PTW window (within the PTWs overlapping in the time domain), the index of the PO in the RRC idle state is used to determine to monitor the paging message. That is, the UE determines to monitor the RAN paging message and the CN paging message by using the index of the PO in the idle state within the PTWs overlapping in the time domain.

As shown in FIG. 7, the first, third and fifth PTW2s overlap with and the respective PTW1 in the time domain. Therefore, in the PTWs overlapping in the time domain (the first, third and fifth PTW2s), since the CN paging and the RAN paging need to be monitored simultaneously, the index of the PO in the idle state is used to determine to monitor the RAN paging message and the CN paging message. However, the first, third and fifth PTW2s and the PTW for the CN paging have parts outside the time domain overlapping part, for example, the first, second and third PTW1s and the PTW for the RAN paging have other parts outside the time domain overlapping part (the length is a window length of the PTW for the CN paging minus a window length of the PTW for the RAN paging). Since only the CN paging needs to be monitored, the index of the PO calculated from the paging parameter in the idle state is used to determine to monitor the CN paging message.

As shown in FIG. 7, in a case where the second and fourth PTW2s do not overlap with any PTW1 in the time domain, the index of the PO calculated from the paging parameter in the inactive state is used to determine to monitor the RAN paging message.

By the above-mentioned combination of the first eDRX parameter and the second eDRX parameter, the third PTW is obtained for monitoring the CN paging and the RAN paging simultaneously. In this way, the index of the PO (Index (i_s), indicating the index of the PO) in the third PTW is the same as the index of the PO in the idle state.

As shown in FIG. 8, embodiments of the present disclosure provide an apparatus for processing information, including: a first determining module 110 configured to determine a target time domain starting location of a first PTW according to a time domain overlapping condition between a candidate time domain location of the first PTW and a time domain location of a second PTW of a UE, in which the first PTW is a PTW allocated by an RAN to the UE, and the second PTW is a PTW allocated by a CN to the UE.

The apparatus for processing the information may be included in the UE or a network device.

In some embodiments, the first determining module 110 may be a program module that, when executed by a processor, implements the above-mentioned operations.

In other embodiments, the first determining module 110 may be a software and hardware integration module. The software and hardware integration module includes, but is not limited to, a programmable array. The programmable array includes, but is not limited to, a field programmable array and/or a complex programmable array.

In still other embodiments, the first determining module 110 may be a hardware module. The hardware module includes, but is not limited to, an application specific integrated circuit.

In some embodiments, the apparatus for processing the information may include a storage module, which is connected to the first determining module 110 and may be at least configured to store information of the target time domain starting location of the first PTW.

In some embodiments, the first determining module 110 is configured to determine that a time domain starting location of an $n^{th}$ first PTW overlaps with a time domain starting location of an $m^{th}$ second PTW in a case where a candidate time domain location of the $n^{th}$ first PTW determined according to a first eDRX parameter overlaps with the $m^{th}$ second PTW in a time domain; and/or determine the time domain starting location of the $n^{th}$ first PTW at least according to the first eDRX parameter in a case where the candidate time domain location of the $n^{th}$ first PTW determined according to the first eDRX parameter does not overlap with the $m^{th}$ second PTW in the time domain.

In some embodiments, the first eDRX parameter at least includes a first eDRX cycle; and the first determining module 110 is configured to determine a hyperframe number according to the first eDRX cycle, in which the hyperframe number indicates a hyperframe where the time domain starting location of the $n^{th}$ first PTW is located; and determine a radio frame number according to the first eDRX cycle or a second eDRX cycle, in which the radio frame number indicates a radio frame where the time domain starting location of the $n^{th}$ first PTW is located, and the second eDRX cycle is an eDRX cycle allocated by the CN to the UE.

In some embodiments, the apparatus further includes a second determining module configured to perform paging monitoring in the first PTW overlapping with the second PTW in a time domain by using an index of a PO of the UE in an idle state.

In some embodiments, the apparatus further includes a third determining module configured to perform the paging monitoring in the second PTW by using the index of the PO of the UE in the idle state in a case where it is determined according to the first eDRX parameter that the first PTW does not exist and it is determined according to a second eDRX parameter that the second PTW exists.

Embodiments of the present disclosure provide a communication device, including a memory for storing instructions executable by a processor, and the processor connected to the memory, in which the processor is configured to execute the method for processing the information provided in any of the foregoing technical solutions.

The processor may include various types of storage media that are non-transitory computer storage media that may continue to memorize the information stored thereon after the communication device is powered down.

Here, the communication device includes a terminal and a network device. The network device may at least include an access device and/or a core network device.

The processor may be connected to the memory via a bus or the like for reading the executable program stored on the memory, for example, at least one of the methods shown in FIGS. 2 to 6.

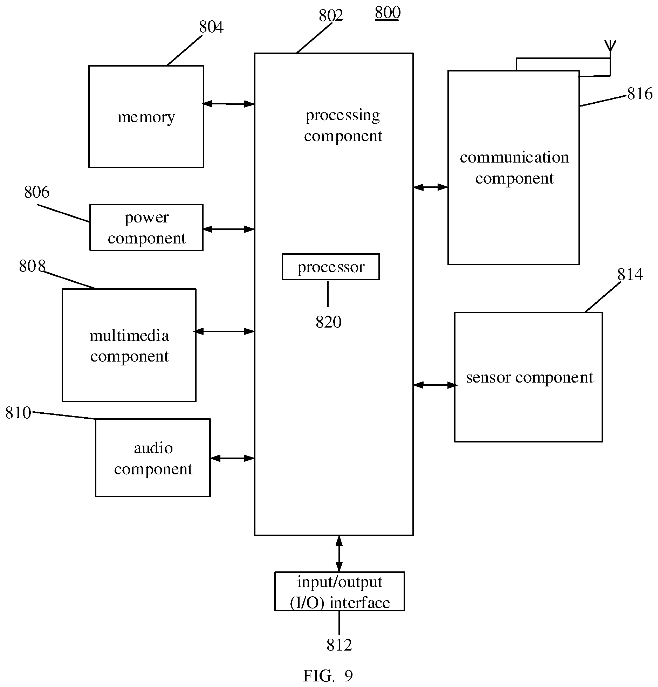

FIG. 9 is a block diagram illustrating a UE 800 according to an illustrative embodiment. For example, the UE 800 may be a mobile phone, a computer, a digital broadcast terminal, a messaging device, a game console, a tablet device, a medical device, a fitness device, a personal digital assistant, or the like.

Referring to FIG. 9, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, phone calls, data communications, camera operations, and recording operations. The processing component 802 may include one or more processors 820 to execute instructions to perform all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in location of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the UE 800 and other devices. The UE 800 may access a wireless network based on a communication standard, such as Wi-Fi, 2G, or 3G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the UE 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned methods.

In an illustrative embodiment, there is also provided a non-transitory computer readable storage medium including instructions, such as included in the memory 804, executable by the processor 820 in the UE 800, for completing the above-mentioned methods. For example, the non-transitory computer-readable storage medium may be a ROM, a random access memory (RAM), a CD-ROM, a magnetic tape, a floppy disc, an optical data storage device, and the like.

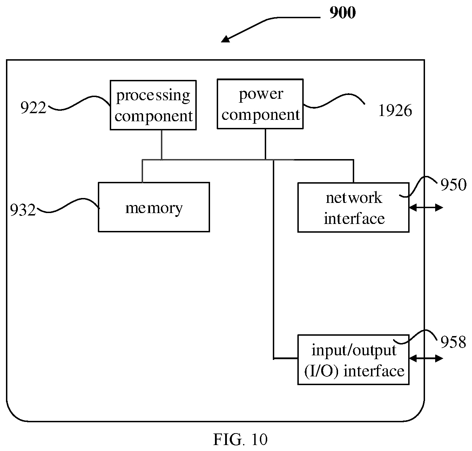

As shown in FIG. 10, embodiments of the present disclosure show a structure of an access device. For example, the communication device 900 may be provided as a network side device. The communication device may be various network elements such as the aforementioned access network element and/or network function.

Referring to FIG. 10, the communication device 900 includes a processing component 922 and a memory resource represented by a memory 932. The processing component 922 may further include one or more processors. The memory 932 is configured to store instructions executable by the processing component 922, such as an application program. The application program stored in the memory 932 may include one or more modules each corresponding to a set of instructions. In addition, the processing component 922 is configured to execute the instructions to perform any of the aforementioned methods applied to the access device, for example, any of the methods shown in any of FIGS. 2 to 6.

The communication device 900 further includes a power component 926 configured to perform a power management on the communication device 900, a wired or wireless network interface 950 configured to connect the communication device 900 to the network, and an input/output (I/O) interface 958. The communication device 900 may operate an operating system stored in the memory 932, such as Windows Server™, Mac OS X™, Unix™, Linux™, Free BSD™, or the like.

Other embodiments of the present disclosure will be apparent to those skilled in the art from consideration of the specification and practice of the present disclosure disclosed here. The present disclosure is intended to cover any variations, uses, or adaptations of the embodiments of the present disclosure following the general principles thereof and including common knowledge or conventional technical means known in the art but not disclosed in the present disclosure. The specification and examples should be considered as illustrative only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

## Claims

1. A method for processing information, performed by a user equipment (UE) or a network device, comprising:
determining a target time domain starting location of a first paging time window (PTW) according to a time domain overlapping condition between a candidate time domain location of the first PTW and a time domain location of a second PTW of the UE, wherein the first PTW is a PTW allocated by a radio access network (RAN) to the UE, and the second PTW is a PTW allocated by a core network (CN) to the UE.

2. The method of claim 1, wherein determining the target time domain starting location of the first PTW according to the time domain overlapping condition between the first PTW and the second PTW of the UE comprises:

determining that a time domain starting location of an $n^{th}$ first PTW overlaps with a time domain starting location of an $m^{th}$ second PTW in a case where a candidate time domain location of the $n^{th}$ first PTW determined according to a first extended discontinuous reception (eDRX) parameter overlaps with the $m^{th}$ second PTW in a time domain; and/or
determining the time domain starting location of the $n^{th}$ first PTW at least according to a first eDRX parameter in a case where the candidate time domain location of the $n^{th}$ first PTW determined according to the first eDRX parameter does not overlap with the $m^{th}$ second PTW in the time domain.

3. The method of claim 2, wherein the first eDRX parameter at least comprises a first eDRX cycle; and
determining the time domain starting location of the $n^{th}$ first PTW at least according to the first eDRX parameter comprises:

determining a hyperframe number according to the first eDRX cycle, wherein the hyperframe number indicates a hyperframe where the time domain starting location of the $n^{th}$ first PTW is located; and
determining a radio frame number according to the first eDRX cycle or a second eDRX cycle, wherein the radio frame number indicates a radio frame where the time domain starting location of the $n^{th}$ first PTW is located, and the second eDRX cycle is an eDRX cycle allocated by the CN to the UE.

4. The method of any one of claims 1 to 3, further comprising:
performing paging monitoring in the first PTW overlapping with the second PTW in a time domain by using an index of a paging occasion (PO) of the UE in an idle state.

5. The method of claim 4, comprising:
performing the paging monitoring in the second PTW by using the index of the PO of the UE in the idle state in a case where it is determined according to the first eDRX parameter that the first PTW does not exist and it is determined according to a second eDRX parameter that the second PTW exists.

6. An apparatus for processing information, comprising:
a first determining module configured to determine a target time domain starting location of a first paging time window (PTW) according to a time domain overlapping condition between a candidate time domain location of the first PTW and a time domain location of a second PTW of a user equipment (UE), wherein the first PTW is a PTW allocated by a radio access network (RAN) to the UE, and the second PTW is a PTW allocated by a core network (CN) to the UE.

7. The apparatus of claim 6, wherein the first determining module is configured to determine that a time domain starting location of an $n$th first PTW overlaps with a time domain starting location of an $m$th second PTW in a case where a candidate time domain location of the $n$th first PTW determined according to a first extended discontinuous reception (eDRX) parameter overlaps with the $m$th second PTW in a time domain; and/or
determine the time domain starting location of the $n$th first PTW at least according to the first eDRX parameter in a case where the candidate time domain location of the $n$th first PTW determined according to the first eDRX parameter does not overlap with the $m$th second PTW in the time domain.

8. The apparatus of claim 7, wherein the first eDRX parameter at least comprises a first eDRX cycle; and
the first determining module is configured to determine a hyperframe number according to the first eDRX cycle, wherein the hyperframe number indicates a hyperframe where the time domain starting location of the $n$th first PTW is located; and determine a radio frame number according to the first eDRX cycle or a second eDRX cycle, wherein the radio frame number indicates a radio frame where the time domain starting location of the $n$th first PTW is located, and the second eDRX cycle is an eDRX cycle allocated by the CN to the UE.

9. The apparatus of any one of claims 6 to 8, further comprising:
a second determining module configured to perform paging monitoring in the first PTW overlapping with the second PTW in a time domain by using an index of a paging occasion (PO) of the UE in an idle state.

10. The apparatus of claim 9, comprising:
a third determining module configured to perform the paging monitoring in the second PTW by using the index of the PO of the UE in the idle state in a case where it is determined according to the first eDRX parameter that the first PTW does not exist and it is determined according to a second eDRX parameter that the second PTW exists.

11. A communication device, comprising:

a processor;
a transceiver;
a memory; and
executable programs stored in the memory and capable of being run by the processor, wherein the processor executes the method of any one of claims 1 to 5 when running the executable programs.

12. A computer storage medium having stored therein executable programs that, when executed by a processor, cause the method of any one of claims 1 to 5 to be implemented.

FIG. 1

S1110: determining a target time domain starting location of a first paging time window (PTW) according to a time domain overlapping condition between a candidate time domain location of the first PTW and a time domain location of a second PTW of the UE

FIG. 2

S1210: determining that a time domain starting location of an $n^{th}$ first PTW overlaps with a time domain starting location of an $m^{th}$ second PTW in a case where a candidate time domain location of the $n^{th}$ first PTW determined according to a first eDRX parameter overlaps with the $m^{th}$ second PTW in a time domain

FIG. 3

S1310: determining a time domain starting location of an $n^{th}$ first PTW at least according to a first eDRX parameter in a case where a candidate time domain location of the $n^{th}$ first PTW determined according to the first eDRX parameter does not overlap with an $m^{th}$ second PTW in a time domain

FIG. 4

S2110: determining a target time domain starting location of a first PTW according to a time domain overlapping condition between a candidate time domain location of the first PTW and a time domain location of a second PTW of the UE

S2120: performing paging monitoring in the first PTW overlapping with the second PTW in a time domain by using an index of a paging occasion (PO) of the UE in an idle state

FIG. 5

S2210: determining whether a first PTW exists according to a first eDRX parameter

S2220: performing paging monitoring in a second PTW by using an index of a PO of the UE in an idle state in a case where it is determined according to the first eDRX parameter that the first PTW does not exist and it is determined according to a second eDRX parameter that the second PTW exists

FIG. 6

PTW1   PTW1   PTW1

PTW2   PTW2   PTW2   PTW2   PTW2

monitoring the RAN paging

monitoring the CN paging

monitoring the CN paging and the RAN paging

FIG. 7

apparatus for processing information

first determining module
110

FIG. 8

FIG. 9

**900**

FIG. 10

**INTERNATIONAL SEARCH REPORT**

| International application No. |
|---|
| **PCT/CN2022/141635** |

| A. | CLASSIFICATION OF SUBJECT MATTER |
|---|---|
| | H04W68/02(2009.01)i |

According to International Patent Classification (IPC) or to both national classification and IPC

| B. | FIELDS SEARCHED |
|---|---|

Minimum documentation searched (classification system followed by classification symbols)

   IPC:H04W

Documentation searched other than minimum documentation to the extent that such documents are included in the fields searched

Electronic data base consulted during the international search (name of data base and, where practicable, search terms used)

   CNTXT, VEN, DWPI, WPABS: 寻呼时间窗, PTW, 候选, 起点, 起始, UE, 核心网, 接入网, 重叠, 位置, RAN, CN, overlap, location, start, candidate

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114128365 A (BEIJING XIAOMI MOBILE SOFTWARE CO., LTD.) 01 March 2022 (2022-03-01) <br> description, paragraphs 0222-0376 | 1-12 |
| A | CN 115314998 A (VIVO MOBILE COMMUNICATION CO., LTD.) 08 November 2022 (2022-11-08) <br> entire document | 1-12 |
| A | CN 115362724 A (GUANGDONG OPPO MOBILE TELECOMMUNICATIONS CORP., LTD.) 18 November 2022 (2022-11-18) <br> entire document | 1-12 |
| A | WO 2021237693 A1 (GUANGDONG OPPO MOBILE TELECOMMUNICATIONS CORP., LTD.) 02 December 2021 (2021-12-02) <br> entire document | 1-12 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 August 2023** | **21 August 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/141635**

| Patent document cited in search report | | | Publication date (day/month/year) | Patent family member(s) | | | Publication date (day/month/year) |
|---|---|---|---|---|---|---|---|
| CN | 114128365 | A | 01 March 2022 | None | | | |
| CN | 115314998 | A | 08 November 2022 | WO | 2022237615 | A1 | 17 November 2022 |
| CN | 115362724 | A | 18 November 2022 | WO | 2021237693 | A1 | 02 December 2021 |
| WO | 2021237693 | A1 | 02 December 2021 | CN | 115362724 | A | 18 November 2022 |

Form PCT/ISA/210 (patent family annex) (July 2022)